# FASCICULE DE BREVET EUROPEEN

(11) **EP 1 299 471 B1**
(45) Date de publication et mention de la délivrance du brevet: **28.11.2012**
(21) Numéro de dépôt: 01957885.5
(22) Date de dépôt: 25.06.2001
(51) Int. Cl.: F16L 59/14, F16L 59/22

(54) **GAINE ISOLANTE FLEXIBLE ET IGNIFUGE**
ISOLIERENDE, FLEXIBELE, FLAMMHEMMENDE AUSKLEIDUNGSSCHLAUCH
INSULATING FLEXIBLE FIRE-RESISTANT SHEATH

(30) Priorité: 30.06.2000 EP 00113862
(43) Date de publication de la demande: 09.04.2003
(73) Titulaire: NMC S.A., B-4731 Eynatten/Raeren (BE)
(72) Inventeur: MAYERES, Jean-Pierre, B-4700 Eupen (BE); PAQUAY, Véronique, B-4890 Timister (BE)
(74) Mandataire: Office Freylinger
(86) Numéro de dépôt international: PCT/EP2001/007198
(87) Numéro de publication internationale: WO 2002/002688

(56) Documents cités:
- EP-A- 0 761 755
- GB-A- 1 049 333

## Description

La présente invention concerne une gaine isolante flexible et ignifuge pour tuyaux d'eau chaude.

Il est connu d'ajouter des agents ignifuges à des polyoléfines afin d'augmenter leur résistance au feu. Les additifs classiquement utilisés sont p.ex. le trioxide d'antimoine, le sulfate d'ammonium et le borax ainsi que les hydroxydes métalliques. Le dosage de ces produits, nécessaires à l'obtention d'une résistance au feu acceptable, affecte en général les propriétés mécaniques du produit fini. En plus, vu leur concentration élevée, ces additifs ignifuges risquent de migrer vers la surface du produit. Leur distribution homogène à l'intérieur du produit n'est donc plus assurée.

FR-A-2214723 tente de résoudre ce problème et propose des cylindres d'isolation thermique à mauvaise inflammabilité, qui sont susceptibles d'être utilisés pour l'isolation thermique des tubes de chauffage et qui conservent d'excellents propriétés de souplesse et élasticité. Les cylindres ont une structure laminée composée d'une mousse de polyoléfine recouverte avec une feuille d'une composition ignifuge.

US-A-3640914 fait mention de compositions en mousse de polyéthylène qui comprennent entre 10 et 20% en poids d'un agent retardateur de l'inflammabilité tel que les cires de paraffine chlorées et entre 10 et 20% en poids d'un assistant tel que le trioxyde d'antimoine.

L'invention a pour objet l'utilisation de ces compositions pour la fabrication de gaines isolantes flexibles pour tuyaux d'eau chaude permettant de réaliser des coudes de 90°.

Conformément à l'invention, cet objectif est atteint par des gaines en mousse de polyoléfine ignifuge obtenue par extrusion d'une composition de polyoléfine comprenant entre 5 et 90% en poids de polyéthylène chloré.

Un des avantages d'une telle polyoléfine est qu'elle présente des qualités ignifuges acceptables sans risques de migration des additifs ignifuges.

L'absence ou le faible pourcentage d'additifs ignifuges classiques a en plus un effet bénéfique sur les propriétés mécaniques de la polyoléfine. En outre, l'incorporation de polyéthylène chloré augmente la flexibilité des compositions de polyoléfine.

Les compositions utiles dans l'invention se caractérisent par une teneur en polyéthylène chloré supérieure ou égale à 5%, de préférence supérieure ou égale à 15%, de manière particulièrement préférée supérieure ou égale à 30%.

La teneur en polyéthylène chloré est inférieure ou égale à 90% de préférence inférieure ou égale à 75% de manière particulièrement préférée inférieure ou égale à 60%.

La polyoléfine est choisie parmi le groupe constitué de polyéthylène et de polypropylène, leurs copolymères et des mélanges de ces produits.

L'ajout de métallocène c'est-à-dire d'un polymère avec une distribution moléculaire très étroite et une répartition des comonomères (ex.: butène, hexène, octène, ...) très uniforme, peut également améliorer la qualité de la mousse.

Avantageusement, la composition de polyoléfines peut contenir entre 2% et 30% de métallocène.

Les compositions utiles dans l'invention se caractérisent habituellement par une teneur en métallocène supérieure ou égale à 2%, de préférence supérieure ou égale à 5%, de manière particulièrement préférée supérieure ou égale à 7%.

La teneur en métallocène est inférieure ou égale à 30% de préférence inférieure ou égale à 20%, de manière particulièrement préférée inférieure ou égale à 15%.

La composition de polyoléfine peut soit être réticulée ou non réticulée. Suivant un mode de réalisation particulier, la composition de la polyoléfine ignifuge non réticulée présente l'avantage que le produit est recyclable.

Avantageusement, la composition de polyoléfine ignifuge comprend en outre du trioxide d'antimoine un autre additif ignifuge classique. Vu que les compositions de polyoléfine utiles pour la réalisation de la présente invention, présentent des propriétés ignifuges intrinsèques, la quantité d'additifs ignifuges traditionnels nécessaires est faible. Les propriétés mécaniques ne sont pas ou peu affectées. De plus, le risque de migration de ces additifs est minimisé.

L'invention utilise une mousse comprenant la composition de polyoléfine ignifuge susmentionnée.

La mousse comporte, de préférence, essentiellement des cellules fermées.

De telles mousses ont l'avantage d'être plus flexibles que les mousses traditionnelles en polyoléfines.

De plus, elles ne présentent aucune odeur particulière.

Un usage particulièrement intéressant de cette polyoléfine ignifuge est l'usage en tant que matériau isolant et/ou en tant que profilé. Lorsque ces mousses sont utilisées en tant que gaines isolantes pour des tuyaux d'eau chaude, il est possible de former des coudes de 90° sans pour autant devoir couper la gaine. Les gaines classiques en mousse de polyéthylène sont plus rigides et doivent être découpées pour former des angles de 90°. Les gaines selon l'invention sont donc plus faciles et plus rapides à mettre en place sur chantier.

La polyoléfine est mélangée à chaud avec du polyéthylène chloré ainsi qu'avec éventuellement des adjuvants et additifs usuels et puis extrudée. Parmi ces additifs, citons les additifs antistatiques, anti-UV, les antioxydants, les pigments, les stabilisateurs volumiques et les agents de nucléation.

Selon un mode de réalisation préféré, le mélange d'une polyoléfine à chaud avec du polyéthylène chloré se fait dans une extrudeuse ; on ajoute un agent de moussage et on extrude le mélange ainsi obtenu afin d'obtenir une mousse.

Le choix de l'agent de moussage n'est pas critique. En principe, tous les agents de moussage utilisés traditionnellement pour le moussage de polyoléfines peuvent également l'être dans le cadre de la présente invention. Avantageusement, on utilise de l'isobutane seul ou en mélange avec un autre agent de moussage.

Les équipements utilisés pour la fabrication de mousses de polyoléfines ordinaires peuvent être utilisés dans la fabrication de mousses de polyoléfines ignifuges.

Par la suite, un mode de réalisation avantageux de l'invention est décrit à titre d'exemple.

### Exemple 1

Le polyéthylène chloré utilisé dans le cadre de la présente invention est fabriqué par Du Pont Dow et est commercialisé sous la dénomination TYRIN 3652P.

Pour la fabrication de mousses et afin d'obtenir une mousse stable de qualité acceptable, il est préférable que le polyéthylène chloré ne contienne que peu d'agents anti-bloquant.

Des concentrations trop élevées en ces agents anti-bloquant rendent la fabrication de mousses d'une qualité acceptable difficile. En particulier, il s'est avéré avantageux que le polyéthylène chloré ne contient que peu ou pas de stéarate de calcium.

Des concentrations maximum de 6% de talc et de 3 % de carbonate de calcium permettait d'obtenir des mousses de bonne qualité.

Une mousse à cellules fermées a été obtenue à partir de :
45.5% (en poids) de polyéthylène chloré décrit plus haut,
35.5 % (en poids) de polyéthylène (LDPE, densité 921 kg/m3)
8.9% (en poids) de métallocène (comonomère hexène)
6.2% (en poids) de trioxide d'antimoine,
2.2 % (en poids) de stéramide,
1.65% (en poids) d'huile de soja. (stabilisant thermique)

L'agent de moussage employé était de l'isobutane.

Des tubes en mousse d'une densité de 30kg/m³ ont été soumis à un test pour déterminer la force de flexion maximale pour obtenir 50 mm de flexion.

La force de flexion maximale était de +/- 44 N pour un échantillon de la mousse sus mentionnée tandis qu'un échantillon de mousse traditionnel en LDPE nécessitait une force de flexion maximale de +/- 102 N. Les échantillons présentaient le même diamètre intérieur et extérieur ainsi que la même densité.

Diverses autres formulations ont été testées et ont permis d'obtenir des mousses de densités variées. Ces mousses présentent, en plus de leur bonne flexibilité, une résistance au feu accrue par rapport à des mousses ne comprenant pas de polyéthylène chloré :

### Exemple 2

45 parts de polyéthylène chloré (DuPont Dow Tyrin)
45 parts LDPE (densité 921 kg/m3)
10 parts trioxyde antimoine
2 parts colorants (noir de carbone)
2 parts surfactants (stéaramide)
2 parts stabilisant thermique (huile de soja époxydée)

### Exemple 3

30 parts de LDPE (densité 921 kg/m3)
70 parts de polyéthylène chloré (Du Pont Dow Tyrin)
2 parts de surfactant (stéaramide)
2 parts de colorants (noir de carbonne)

### Exemple 4

40 parts de LDPE (densité 921 kg/m3)
60 parts de polyéthylène chloré (Du Pont Dow Tyrin)
4.8 parts de trixyde d'antimoine
2 parts de surfactant (stéaramide)
2 parts de colorants (noir de carbonne)

### Exemple 5

50 parts de LDPE
50 parts de polyéthylène chloré (PCE 140B de Tianteng Chemical Co.)
7.5 parts de surfactant (stéaramide)
3 parts de colorants (noir de carbonne)

### Exemple 6

60 parts de LDPE
40 parts de polyéthylène chloré (Hoechst Pe-c 4135h)
2 parts de surfactant (stéaramide)
2 parts de colorants (noir de carbonne)

### Exemple 7

50 parts polyéthylène chloré (Dupont Dow Tyrin)
38 parts LDPE
5 parts ignifugeant (type bromé)
7 parts trioxyde antimoine
5 parts colorants (noir de carbonne)
3 parts surfactants (stéaramide)
10 parts métallocène (comonomère hexène)
1 parts aluminium
2 parts stabilisant thermique (huile de soja époxydée)

### Exemple 8

51 parts polyéthylène chloré (Dupont Dow Tyrin)
40 parts LDPE (densité 921 kg/m3)
7 parts trioxyde antimoine
5 parts colorants (noir de carbonne)
3 parts surfactants (stéaramide)
10 parts métallocène (comonomère hexène)
2 parts stabilisant thermique (huile de soja époxydée)

### Exemple 9

51 parts polyéthylène chloré (Dupont Dow Tyrin)
40 parts LDPE (densité 921 kg/m3)
7 parts trioxyde antimoine
2 parts colorants (noir de carbonne)
3 parts surfactants (glycérol mono stéarate)
10 parts métallocène (comonomère hexène)
2 parts stabilisant thermique (huile de soja époxydée)

## Revendications

1. Gaine isolante flexible pour tuyaux d'eau chaude permettant de réaliser des coudes de 90° sans pour autant devoir couper la gaine, en mousse de polyoléfine ignifuge extrudée, la mousse étant susceptible d'être obtenue par extrusion d'une composition de polyoléfine choisie parmi le groupe constitué de polyéthylène et de Polypropylène, leurs copolymères et des mélanges de ces produits, **caractérisée en ce que** la composition comprend entre 5% et 90% en poids de polyéthylène chloré.

2. Gaine selon la revendication 1, **caractérisée en ce que** la polyoléfine est non réticulée.

3. Gaine selon la revendication 1, **caractérisée en ce que** la polyoléfine est réticulée.

4. Gaine selon l'une quelconque des revendications précédentes, **caractérisée en ce que** la composition comprend en outre du trioxide d'antimoine.

5. Gaine selon l'une quelconque des revendications précédentes, **caractérisée en ce que** la composition comprend en outre des additifs antistatiques, anti-UV, les antioxydants, les pigments, les stabilisateurs volumiques ou des agents de nucléation.

6. Gaine selon l'une quelconque des revendications précédentes, **caractérisé en ce que** la mousse comporte essentiellement des cellules fermées.

## Claims

1. A flexible insulating sleeve for hot water pipes allowing the production of 90° bends without requiring the sleeve to be cut, made from extruded fire-retardant polyolefin foam, the foam being obtainable by extrusion of a polyolefin composition selected from the group made up of polyethylene and polypropylene, the copolymers thereof and blends of these products, **characterised in that** the composition comprises between 5% and 90% by weight of chlorinated polyethylene.

2. A sleeve according to claim 1, **characterised in that** the polyolefin is uncrosslinked.

3. A sleeve according to claim 1, **characterised in that** the polyolefin is crosslinked.

4. A sleeve according to any one of the preceding claims, **characterised in that** the composition furthermore comprises antimony trioxide.

5. A sleeve according to any one of the preceding claims, **characterised in that** the composition furthermore comprises antistatic additives, UV stabilisers, antioxidants, pigments, volume stabilisers or nucleating agents.

6. A sleeve according to any one of the preceding claims, **characterised in that** the foam essentially comprises closed cells.

## Patentansprüche

1. Flexibler Isolierschlauch für Warmwasserrohre, der das Herstellen von 90°-Bögen ermöglicht, ohne dass dazu der Schlauch geschnitten werden muss, aus extrudiertem flammhemmendem Polyolefinschaumstoff, wobei der Schaumstoff dazu geeignet ist, durch Extrusion einer Polyolefinzusammensetzung erhalten zu werden, wobei das Polyolefin aus der Gruppe bestehend aus Polyethylen und Polypropylen, deren Copolymeren und Gemischen dieser Produkte ausgewählt ist, **dadurch gekennzeichnet, dass** die Zusammensetzung zwischen 5 Gew.-% und 90 Gew.-% Chlorpolyethylen umfasst.

2. Schlauch nach Anspruch 1, **dadurch gekennzeichnet, dass** das Polyolefin nicht vernetzt ist.

3. Schlauch nach Anspruch 1, **dadurch gekennzeichnet, dass** das Polyolefin vernetzt ist.

4. Schlauch nach einem der vorhergehenden Ansprüche, **dadurch gekennzeichnet, dass** die Zusammensetzung außerdem Antimontrioxid umfasst.

5. Schlauch nach einem der vorhergehenden Ansprüche, **dadurch gekennzeichnet, dass** die Zusammensetzung außerdem antistatische Mittel, UV-Schutzmittel, Antioxidationsmittel, Pigmente, Volumenstabilisatoren oder Nukleierungsmittel umfasst.

6. Schlauch nach einem der vorhergehenden Ansprüche, **dadurch gekennzeichnet, dass** der Schaumstoff im Wesentlichen geschlossene Zellen umfasst.
